# EUROPÄISCHE PATENTSCHRIFT

(11) **EP 3 122 543 B1**
(45) Veröffentlichungstag und Bekanntmachung des Hinweises auf die Patenterteilung: **23.06.2021**
(21) Anmeldenummer: 15712113.8
(22) Anmeldetag: 23.03.2015
(51) Int. Cl.: B29C 70/46, B29C 70/50, B29C 35/02, B29C 70/48, B29L 31/22

(54) **FASERVERBUNDBAUTEIL UND VERFAHREN ZUM HERSTELLEN EINES FASERVERBUNDBAUTEILS**
COMPOSITE FIBER COMPONENT AND METHOD FOR PRODUCING A COMPOSITE FIBER COMPONENT
PIÈCE EN MATÉRIAU COMPOSITE RENFORCÉ PAR DES FIBRES ET SON PROCÉDÉ DE FABRICATION

(30) Priorität: 28.03.2014 DE 102014205861
(43) Veröffentlichungstag der Anmeldung: 01.02.2017
(73) Patentinhaber: Brose Fahrzeugteile SE & Co. Kommanditgesellschaft, Coburg, 96450 Coburg (DE)
(72) Erfinder: HOFMANN, Jochen, 96257 Marktgraitz (DE); HARTMANN, Ulf, 97422 Schweinfurt (DE); BAUERSACHS, Andrea, 96237 Ebersdorf (DE)
(74) Vertreter: 2K Patentanwälte Blasberg Kewitz & Reichel
(86) Internationale Anmeldenummer: PCT/EP2015/056045
(87) Internationale Veröffentlichungsnummer: WO 2015/144612

(56) Entgegenhaltungen:
- EP-A1- 1 603 735
- DE-A1- 19 531 406
- DE-A1-102012 104 044
- None

## Beschreibung

### TECHNISCHES GEBIET

Die Erfindung betrifft ein Faserverbundbauteil, insbesondere eine faserverstärkte Thermoplastbauteilanordnung, wie beispielsweise ein Organoblechbauteil, und ein Verfahren zum Herstellen eines derartigen Faserverbundbauteils, beispielsweise einer faserverstärkten Thermoplastbauteilanordnung.

### TECHNISCHER HINTERGRUND

Eine faserverstärkte Thermoplastbauteilanordnung, wie beispielsweise eine Organoblechbauteilanordnung, besteht aus einem thermoplastischen Faser-Kunststoff-Verbund.

Faserverstärkte Thermoplaste (FVT) sind Verbundmaterialien, welche aus Verstärkungsfasern zur Lastaufnahme und einem Matrixwerkstoff zur Gewährleistung der Faserorientierung und der Formstabilität bestehen. Als Faserwerkstoffe können dabei beispielsweise Glasfaser, Aramidfaser, Kohlenstofffaser usw., sowie Fasern auf Naturbasis, wie beispielsweise Sisal, Kokos, Hanf, Flachs usw. eingesetzt werden. Hierbei wird zwischen kurzen, langen und endlosen Verstärkungsfasern unterschieden, wobei Kurzfasern und Langfasern meist direkt mit Thermoplastgranulat verspritzt oder extrudiert werden. Endlose Verstärkungsfasern werden wiederum im Allgemeinen als Faserstränge, sogenannte Rovings, Gestricke, Gewebe oder Geflechte verarbeitet. Als Matrixwerkstoff wird ein thermoplastischer Kunststoff verwendet.

Zur Fertigung von endlos faserverstärkten Thermoplastbauteilen in Profilform können beispielsweise die Wickeltechnik, das Pultrusionsverfahren oder die Intervall-Heißpresstechnik eingesetzt werden. Flächige Bauteile werden heute im Thermoform-Verfahren mit zusätzlichem Hinterspritzen oder Fließpressen hergestellt, beispielsweise in einem Spritzformprozess. Dazu werden in der Regel Halbzeuge verwendet, die in Form von teilweise oder vollständig vorkonsolidierten Platten angeboten und als Organobleche oder thermoplastische Prepegs bezeichnet werden. Auch textile Gebilde aus Hybridgarn, bei dem neben der Verstärkungsfaser auch die Matrix in Faserform vorliegt, können als Halbzeug eingesetzt werden.

Die Druckschrift WO 2012/032189 A2 offenbart ein Verfahren zur Herstellung einer Sitzlehnenrückwand für eine Sitzlehne unter Verwendung mindestens eines Organoblechs. Die Druckschrift DE 10 2012 104 044 A1 offenbart ein Verfahren zum zumindest bereichsweisen Konsolidieren eines thermoplastischen Vorformlings in einem Formwerkzeug. Die Druckschrift DE 10 2011 056 686 A1 offenbart ein Verfahren zum Herstellen eines Faserverbundbauteils. Die DE 195 31 406 A1 offenbart ein Halbzeug für Preßformteile. Die EP 1 603 735 A1 beschreibt ein Verfahren zur Herstellung einer Verbindung zwischen Verbundteilen.

### ZUSAMMENFASSUNG DER ERFINDUNG

Es besteht ein Bedarf nach Lösungen für die Bereitstellung von Faserverbundbauteilen, die eine verbesserte lokale Kraftaufnahme ermöglichen sowie verbesserte Steifigkeits- und Festigkeitseigenschaften aufweisen.

Demgemäß wird ein Faserverbundbauteil mit den Merkmalen des Patentanspruchs 1 und ein Verfahren zum Herstellen eines Faserverbundbauteils mit den Merkmalen des Patentanspruches 6 vorgeschlagen.

Gemäß einem ersten Aspekt der Erfindung umfasst ein Faserverbundbauteil mindestens eine Lage eines Fasermaterials, und eine thermoplastischen Matrix, welche das Fasermaterial tränkt, wobei das Faserverbundbauteil mindestens einen ersten Bereich aufweist, in dem der lokale Konsolidierungsgrad des Faserverbundbauteils über einem ersten Konsolidierungsschwellwert liegt, und wobei das Faserverbundbauteil mindestens einen zweiten, zu dem ersten Bereich benachbart liegenden Bereich aufweist, in dem der lokale Konsolidierungsgrad des Faserverbundbauteils unter einem zweiten Konsolidierungsschwellwert liegt, wobei der zweite Konsolidierungsschwellwert kleiner als der erste Konsolidierungsschwellwert ist.

Erfindungsgemäß bildet der zweite Bereich ein Filmscharnier aus. Dies bietet den Vorteil, dass in Bereichen des Faserverbundbauteils, die nachfolgenden Umformschritten unterworfen werden sollen, derartige Umformschritte durch den verringerten Konsolidierungsgrad vereinfacht werden.

Erfindungsgemäß umfasst das Faserverbundbauteil mindestens ein Organoblech oder ein vorkonsolidiertes Blech, beispielsweise ein Twintex®-Blech. Derartige Bleche haben den Vorteil, dass die Verstärkungsfasern bereits teilweise imprägniert und konsolidiert sind und darum nur noch eine kurze Verarbeitungszeit und ein relativ geringer Druck zum Umformen erforderlich sind. Darüber hinaus ist es für die vorkonsolidierten Bereiche nicht mehr zwangsläufig notwendig, im Rahmen der Weiterverarbeitung der Organobleche eine weitere Konsolidierung vorzunehmen, da diese vorkonsolidierten Bereiche schon einen ausreichenden Teilkonsolidierungsgrad, das heißt eine nicht vollständige Konsolidierung im gewünschten Maße aufweisen.

Gemäß einem zweiten Aspekt der Erfindung weist ein Verfahren zum Herstellen eines Faserverbundbauteils ein Konsolidieren eines ersten Bereichs eines faserverstärkten Halbzeugs mit mindestens einer Lage eines Fasermaterials und einer thermoplastischen Matrix, welche das Fasermaterial tränkt, bis zu einem ersten Konsolidierungsgrad, und ein Konsolidieren eines zu dem ersten Bereich benachbart liegenden zweiten Bereichs des faserverstärkten Halbzeugs bis zu einem von dem ersten Konsolidierungsgrad verschiedenen zweiten Konsolidierungsgrad auf, wobei der zweite Konsolidierungsgrad kleiner als der erste Konsolidierungsgrad ist, und wobei der zweite Bereich ein Filmscharnier ausbildet, und/oder wobei das Faserverbundbauteil (1) mindestens ein Organoblech oder ein vorkonsolidiertes Blech umfasst.

Eine wesentliche Idee der Erfindung besteht darin, Steifigkeitsunterschiede zwischen verschiedenen Abschnitten eines Faserverbundbauteils nicht oder nicht nur über eine einzubringende Bauteilgeometrie oder die Wahl des Fasermaterials zu beeinflussen, sondern eine gezielte örtliche Variation des Konsolidierungsgrades bzw. des Kompaktierungsgrades des Faserverbundbauteils in bestimmten Abschnitten vorzunehmen. Durch eine Einstellung des Konsolidierungsgrades, beispielsweise über die Einstellung unterschiedlicher Kompaktierungsdrücke oder Kompaktierungstemperaturen bei der Verfestigung und/oder Imprägnierung des Fasermaterials mit einer thermoplastischen Matrix, kann die lokale Steifigkeit sowie die lokale Schlagzähigkeit des Faserverbundbauteils eingestellt werden.

Vorteilhafte technische Effekte dieser Vorgehensweise sind die Möglichkeiten zur Ausbildung von Zonen lokal verminderter Schlagzähigkeit, zur Verbesserung des Beulverhaltens, zur Ausbildung von Zonen erhöhter Aufnahmefähigkeit von Verformungsenergie und/oder zur Verbesserung der lokalen Krafteinleitung.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform des erfindungsgemäßen Faserverbundbauteils kann der zweite Konsolidierungsschwellwert zwischen 10% und 80% des ersten Konsolidierungsschwellwerts betragen. Durch die gezielte Einstellung verschiedener Konsolidierungsgrade können das akustische Verhalten, das Schwingungs-Dämpfungsverhalten sowie die Schlagzähigkeit des Faserverbundbauteils günstig beeinflusst werden.

Gemäß einer weiteren Ausführungsform des erfindungsgemäßen Faserverbundbauteils kann das Faserverbundbauteil weiterhin einen Krafteinleitungsbereich aufweisen, wobei der zweite Bereich einen kreisförmigen oder elliptischen Bereich um den Krafteinleitungsbereich ausbildet.

Gemäß einer weiteren Ausführungsform des erfindungsgemäßen Faserverbundbauteils kann der Krafteinleitungsbereich eine Klebestelle, eine Nietstelle, eine Schweißstelle, eine Verschraubungsstelle oder einen Schraubdom ausbilden. Gerade in den Bereichen derartiger Krafteinleitungsstellen ist eine gleichmäßigere und effizientere Krafteinleitung in das Faserverbundbauteil in vorteilhafter Weise möglich.

Gemäß einer weiteren Ausführungsform des erfindungsgemäßen Faserverbundbauteils kann der erste Bereich eine erste Anzahl von Faserlagen aufweisen, und der zweite Bereich kann eine zweite Anzahl von Faserlagen aufweisen, die höher als die erste Anzahl von Faserlagen ist. Steifigkeitssprünge, die durch das Einbringen lokaler Verstärkungsfaserlagen entstehen, können auf diese Weise durch das gezielte Ausbilden von Übergangsbereichen nicht vollständiger Konsolidierung besonders vorteilhaft abgemildert werden

Gemäß einer weiteren Ausführungsform des erfindungsgemäßen Faserverbundbauteils kann das Faserverbundbauteil weiterhin einen dritten Bereich aufweisen, welcher Lagen mit von der thermoplastischen Matrix ungetränktem Fasermaterial aufweist, wobei der zweite Bereich zwischen dem ersten Bereich und dem dritten Bereich angeordnet ist. Besonders bei Multimaterialverbindungen, bei denen ein Faserverbundbauteil an den jeweiligen Fügestellen in einen Bereich blanker bzw. ungetränkter Fasern ausläuft, kann ein Übergangsbereich zwischen dem vollständig konsolidierten, mit Matrixmaterial getränkten Bereich und dem Bereich ungetränkter Fasern ausgebildet werden, der die Krafteinleitung in die Fasern in vorteilhafter Weise verbessern kann.

Gemäß einer weiteren Ausführungsform des erfindungsgemäßen Faserverbundbauteils kann das Fasermaterial aus einer Faseranordnung aus Glasfasern, Aramidfasern, Kohlenstofffasern, Sisal, Hanf, Kokosfasern, Baumwollfasern und/oder Flachs gebildet sein, und die Faseranordnung kann ein Gewebe, einen Faserstrang, ein Gestrick, ein Geflecht, ein Gelege, eine Matte und/oder ein Vlies bilden. Neben den explizit angeführten Fasern auf Naturbasis können ebenso weitere Fasern auf Naturbasis eingesetzt werden. Bei den Fasern können dabei kurze, lange und/oder Endlosfasern eingesetzt werden.

Gemäß einer weiteren Ausführungsform des erfindungsgemäßen Verfahrens kann der zweite Konsolidierungsgrad zwischen 10% und 80% des ersten Konsolidierungsgrads betragen.

Gemäß einer weiteren Ausführungsform des erfindungsgemäßen Verfahrens kann das Konsolidieren des ersten Bereichs ein Aufbringen eines ersten Konsolidierungsdrucks auf das faserverstärkte Halbzeug, und das Konsolidieren des zweiten Bereichs ein Aufbringen eines zweiten Konsolidierungsdrucks, welcher geringer als der erste Konsolidierungsdruck ist, auf das faserverstärkte Halbzeug umfassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE BESCHREIBUNG DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Illustration einer Schnittansicht eines Faserverbundbauteils gemäß einer Ausführungsform der Erfindung;
- Fig. 2: eine schematische Illustration von Aufsichten auf ein Faserverbundbauteil gemäß weiterer Ausführungsformen der Erfindung;
- Fig. 3: eine schematische Illustration einer Schnittansicht und einer Draufsicht auf ein Faserverbundbauteil gemäß einer weiteren Ausführungsform der Erfindung;
- Fig. 4: eine schematische Illustration einer Schnittansicht eines Faserverbundbauteils gemäß einer weiteren Ausführungsform der Erfindung;
- Fig. 5: eine schematische Illustration einer Schnittansicht eines Faserverbundbauteils gemäß einer weiteren Ausführungsform der Erfindung;
- Fig. 6: eine schematische Illustration einer Schnittansicht eines Faserverbundbauteils gemäß einer weiteren Ausführungsform der Erfindung;
- Fig. 7: eine schematische Illustration einer Schnittansicht eines Faserverbundbauteils gemäß einer weiteren Ausführungsform der Erfindung; und
- Fig. 8: ein Blockschaubild eines Verfahrensablaufs zum Herstellen eines Faserverbundbauteils gemäß einer weiteren Ausführungsform der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente in den Zeichnungen sind nicht notwendigerweise maßstabsgetreu zueinander gezeigt.

In den Figuren sind gleiche, funktionsgleiche und gleich wirkende Elemente, Merkmale und Komponenten - sofern nichts gegenteiliges explizit ausgeführt ist - jeweils mit denselben Bezugszeichen versehen.

### AUSFÜHRLICHE BESCHREIBUNG VON AUSFÜHRUNGSBEISPIELEN

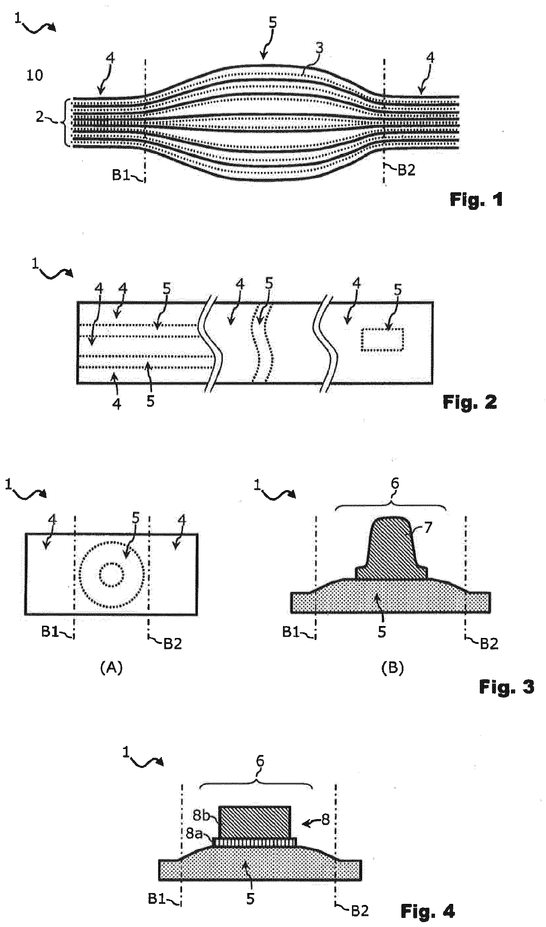

Fig. 1 zeigt eine schematische Illustration einer Schnittansicht durch ein Faserverbundbauteil 1. Das Faserverbundbauteil 1 kann dabei insbesondere ein faserverstärktes Thermoplastbauteil sein. Aus Gründen der Einfachheit wird im Folgen der Begriff Faserverbundbauteil synonym für ein faserverstärktes Thermoplastbauteil verwendet. Das Faserverbundbauteil 1 kann dabei ein faserverstärktes Halbzeug umfassen, beispielsweise ein Organoblech, welches eine Faseranordnung aus ein oder mehr Lagen eines Fasermaterials umfasst, die in ein thermoplastisches Matrixmaterial, beispielsweise ein Kunststoffmatrixmaterial, eingebettet bzw. durch selbiges getränkt sind. Durch die Verwendung des thermoplastischen Matrixmaterials ist das Faserverbundbauteil 1 thermisch umformbar.

Das Fasermaterial kann beispielsweise eine Faseranordnung in Form eines Gewebes, eines Faserstrangs, eines Gestrickes, eines Geflechts, eines Geleges, einer Matte und/oder eines Vlies umfassen. Die Gelege können dabei Multiaxialgelege oder unidirektionale Gelege sein. Des Weiteren können die Fasern des Fasermaterials kurze, lange und/oder Endlosfasern sein. Das Faserverbundbauteil 1 kann beispielsweise Twintex® umfassen. Dabei werden Verstärkungsfasern, wie beispielsweise Glasfasern, mit thermoplastischen Kunststofffasern, zum Beispiel aus Polypropylen zu Rovings verarbeitet, diese verwoben und anschließend erwärmt und unter Druck zu einem Halbzeug geformt.

Der Faserwerkstoff der in dem Faserverbundbauteil 1 verwendeten Fasern kann beispielsweise Glasfaser, Aramidfaser, Kohlenstofffaser, Sisal, Hanf, Kokosfaser, Baumwollfaser und/oder Flachs sein. Die Fasern können dabei rechtwinklig zueinander verlaufen, je nach gewünschten mechanischen Eigenschaften des Faserverbundbauteils 1 hinsichtlich Steifigkeit, Festigkeit und Wärmeausdehnung. Die Ausführungsformen der hierin offenbarten Faserverbundbauteile sind auf die genannten Faserwerkstoffe und die genannten Faserverarbeitungsformen, wie Gewebe, Vlies, Gestrick oder ähnliches nicht beschränkt. Das Faserverbundbauteil 1 kann dabei in seiner Ausgangsform als flächiges Halbzeug oder als geformtes Strukturbauteil bereitgestellt werden.

Das Faserverbundbauteil 1 in Fig. 1 umfasst mindestens eine Lage 2 eines Fasermaterials, die durch eine thermoplastische Matrix 3 getränkt ist. Die thermoplastische Matrix 3 kann beispielsweise thermoplastische Kunststoffe, wie etwa Acrylnitril-Butadien-Styrol (ABS), Polyamid (PA), Polyetherimid (PEI), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK), Polypropylensulfid (PPS) oder Polyvinylchlorid (PVC) umfassen.

Das Faserverbundbauteil 1 besitzt zwei Bereiche 4 und 5, die benachbart zueinander liegen, das heißt entweder beabstandet zueinander sind oder angrenzend zueinander verlaufen. Die Bereiche 4 und 5 unterscheiden sich im Wesentlichen über ihren lokalen Konsolidierungsgrad, das heißt dem Kompaktierungs- und Verfestigungsgrad, den das Bauteil in dieser Bauteilzone nach einer Beaufschlagung mit Druck und Wärme erreicht. Durch die Konsolidierung wird das Fasermaterial 2 mit dem Matrixmaterial 3 imprägniert und verdichtet. Durch die Verdichtung können Luft- oder Gaseinschlüsse aus dem Faserverbund entfernt werden. Im Folgenden werden jeweils die Grenzen zwischen ersten und zweiten Bereichen mit B1 und B2 sowie strichpunktierten Linien veranschaulicht. Es sollte dabei jedoch klar sein, dass die Grenzverläufe zwischen ersten und zweiten Bereichen nicht zwangsläufig eindeutig scharf sind und zwischen ersten und zweiten Bereiche jeweils Zwischenbereiche mit sich im Wesentlichen stetig änderndem Konsolidierungsgrad liegen können.

In dem ersten Bereich 4 liegt der lokale Konsolidierungsgrad des Faserverbundbauteils 1 über einem ersten Konsolidierungsschwellwert, während der lokale Konsolidierungsgrad des Faserverbundbauteils 1 in dem zweiten Bereich 5 unter einem zweiten Konsolidierungsschwellwert liegt. Der zweite Konsolidierungsschwellwert ist dabei insbesondere kleiner als der erste Konsolidierungsschwellwert ist, so dass man in dem ersten Bereich 4 von einer vollständigen oder nahezu vollständigen und in dem zweiten Bereich 5 von einer unvollständigen oder teilweisen Konsolidierung sprechen kann. Beispielsweise kann der zweite Konsolidierungsschwellwert auf etwa zwischen 10% und 80% des ersten Konsolidierungsschwellwerts eingestellt werden. Dadurch kann die Haftung zwischen dem Fasermaterial und dem Matrixmaterial selektiv eingestellt werden.

Das Faserverbundbauteil 1 der Fig. 1 wird eingesetzt, um ein Filmscharnier in dem zweiten Bereich 5 auszubilden. Filmscharniere bzw. Filmgelenke sind Bandscharniere, welche als flexible und dünnwandige Gelenkrille zwischen zwei zu verbindenden Abschnitten eines Faserverbundbauteils ausgebildet sind. Zudem kann der Anteil an Matrixmaterial in dem zweiten Bereich 5 verringert werden, um Umformschritte in dem zweiten Bereich 5 zu vereinfachen, beispielsweise ein Knicken oder Biegen des Faserverbundbauteils 1 in dem zweiten Bereich 5.

Fig. 2 zeigt eine schematische Illustration einer Aufsicht auf ein Faserverbundbauteil 1, um die geometrischen Gestaltungsmöglichkeiten für die zweiten Bereiche 5 exemplarisch zu erläutern. Ein Faserverbundbauteil 1 kann dabei nur einen oder einige der in Fig. 2 beispielhaft dargestellten zweiten Bereiche 5 aufweisen. Die Anzahl der zweiten Bereiche 5 sowie die Kombinationsmöglichkeiten unterschiedlicher Bereichsgeometrien für die zweiten Bereiche 5 sind dabei grundsätzlich nicht eingeschränkt und können entsprechend der gewünschten Steifigkeitsverhältnisse in dem Faserverbundbauteil 1 gewählt werden.

Ganz links in Fig. 2 sind streifenförmige zweite Bereiche 5 gezeigt, die durch erste Bereiche 4 höheren Konsolidierungsgrads unterbrochen sind. Dadurch kann beispielsweise das akustische Verhalten des Faserverbundbauteils 1 aufgrund elastischer Verformungen verbessert werden. Zudem kann das Schwingungs- und Dämpfungsverhalten durch derartige zweite Bereiche 5 verbessert werden.

In der Mitte und rechts in Fig. 2 sind mäandrierte oder lokale Bereiche 5 in ihrem Konsolidierungsgrad vermindert, um beispielsweise bei plastischen Verformungen des Faserverbundbauteils 1 Bereiche mit erhöhter Schlagzähigkeit zu erzeugen und Verformungsenergie besser im Bauteil aufnehmen zu können.

Besonders gut eignen sich die zweiten Bereiche 5 verminderter oder nicht vollständiger Konsolidierung für den Einsatz in Krafteinleitungsbereichen von Faserverbundbauteilen, von denen in den Fig. 3, 4 und 5 drei Beispiele dargestellt sind. Fig. 3 zeigt eine schematische Illustration einer Aufsicht (A) eines Faserverbundbauteils 1 mit einem Krafteinleitungsbereich 6, der innerhalb eines zweiten Bereichs 5 verminderten Konsolidierungsgrads liegt. Der zweite Bereich 4 bildet hierbei einen kreisförmigen oder elliptischen Bereich um den Krafteinleitungsbereich 6 aus. Wie sich in der Schnittansicht (B) des Faserverbundbauteils 1 der Ansicht (A) darstellt, ist auf dem Krafteinleitungsbereich 6 ein Schraubdom 7 ausgebildet, der durch den verminderten Konsolidierungsgrad im zweiten Bereich 5 eine sanftere Krafteinleitung in das Faserverbundbauteil 1 ermöglicht. Zudem ist der Schraubdom 7 dadurch besser gegen Überlast gesichert.

Fig. 4 zeigt eine Schnittansicht eines Faserverbundbauteils 1 mit einem Krafteinleitungsbereich 6, der innerhalb eines zweiten Bereichs 5 verminderten Konsolidierungsgrads liegt. Der Krafteinleitungsbereich 6 der Fig. 4 ist eine Klebestelle 8, an der über ein Klebemedium 8a ein Klebepartner 8b an das Faserverbundbauteil 1 angefügt wird. Durch den zweiten Bereich 5 verminderten Konsolidierungsgrads wird die Oberfläche des Faserverbundbauteils 1 vergrößert, so dass das Klebemedium 8a eine verbesserte Reaktionsfläche erhält. Zudem wird durch den verminderten Konsolidierungsgrad im zweiten Bereich 5 eine sanftere Krafteinleitung in das Faserverbundbauteil 1 im Bereich der Klebestelle 8 ermöglicht.

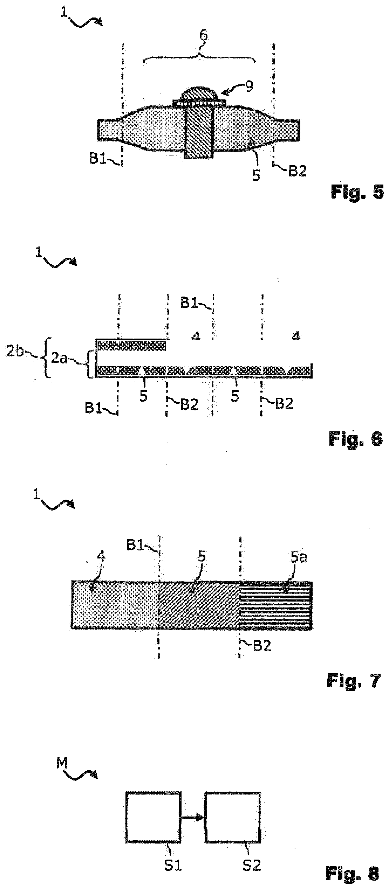

Fig. 5 zeigt eine Schnittansicht eines Faserverbundbauteils 1 mit einem Krafteinleitungsbereich 6, der innerhalb eines zweiten Bereichs 5 verminderten Konsolidierungsgrads liegt. Der Krafteinleitungsbereich 6 der Fig. 5 ist eine Verschraubungsstelle 9, an der eine Verschraubung in das Faserverbundbauteil 1 eingebracht wird. Durch den zweiten Bereich 5 verminderten Konsolidierungsgrads wird die zur Verfügung stehende Bauteildicke des Faserverbundbauteils 1 lokal erhöht, so dass eine bessere Kraftübertragung im Bereich der Verschraubungsstelle 9 möglich ist. Zudem wird durch den verminderten Konsolidierungsgrad im zweiten Bereich 5 eine sanftere Krafteinleitung in das Faserverbundbauteil 1 im Bereich der Verschraubungsstelle 9 ermöglicht.

In ähnlicher Weise wie in Fig. 4 und 5 können auch Nietstellen oder Schweißstellen ausgebildet werden. Bei Schweißstellen ergibt sich zudem der Vorteil, dass in den nicht vollständig konsolidierten Bereichen 5 gezielt Endlosfasern in die Schweißzone verschoben werden können.

Fig. 6 zeigt eine schematische Darstellung eines Faserverbundbauteils 1, welches entlang einer Erstreckungsrichtung verschiedene Anzahl von Faserlagen 2 aufweist. Von rechts nach links nimmt dabei beispielsweise die Lagenanzahl zu, um lokale Verstärkungslagen erzeugen zu können. In jeder Zone, in der eine neue Verstärkungslage beginnt, nimmt die Steifigkeit des gesamten Faserverbundbauteils 1 lokal sprunghaft zu. Um die Höhe des Steifigkeitssprungs zu vermindern, kann ein erster Bereich 4 in einer Zone mit einer ersten Anzahl von Faserlagen 2a ausgebildet werden. Dieser erste Bereich 4 schließt sich unmittelbar an einen zweiten Bereich 5 an, der eine zweite Anzahl von Faserlagen 2b aufweist, die höher als die erste Anzahl von Faserlagen 2a ist. Wenn der zweite Bereich 5 nun gegenüber dem ersten Bereich einen lokal verringerten Konsolidierungsgrad aufweist, nimmt die Steifigkeit des Faserverbundbauteils 1 nur schrittweise zu, wodurch der Steifigkeitsanstieg über das gesamte Faserverbundbauteil 1 hinweg sanfter verläuft. Zudem wird der Kerbfaktor bzw. die Kerbwirkung zwischen den einzelnen Lagenübergängen verringert.

Fig. 7 zeigt eine schematische Illustration einer Aufsicht auf ein Faserverbundbauteil 1, welches in einem dritten Bereich 5a, beispielsweise ein Endabschnitt des Faserverbundbauteils 1, kein Matrixmaterial 3, das heißt blanke, ungetränkte oder unbenetzte Fasern aufweist. Dieser dritte Bereich 5a kann sich an einen zweiten Bereich 5 verminderten Konsolidierungsgrades anschließen, wobei der zweite Bereich 5 zwischen dem ersten Bereich 4 und dem dritten Bereich 5a angeordnet ist. Solche dritten Bereiche 5a werden beispielsweise an Fügestellen von Faserverbundbauteilen eingesetzt, die durch Kleben mit anderen Fügepartnern im Bereich der blanken Fasern verbunden werden. Durch die stufenweise Verringerung des Konsolidierungsgrades vom ersten Bereich 4 über den zweiten Bereich 5 zum dritten Bereich 5a hin kann eine optimale Krafteinleitung in die Fasern gewährleistet werden.

Die in den Fig. 1 bis 7 gezeigten Faserverbundbauteile können beispielsweise mittels einer Spritzgussform eines Spritzgusswerkzeugs zum Einspritzen thermoplastischen Kunststoffs hergestellt werden. Dabei kann zum Beispiel ein Organoblech oder ein vorkonsolidiertes Blech, beispielsweise ein Twintex®-Blech, bzw. Lagenstapel aus derartigen Blechen eingesetzt werden, die als Halbzeug oder vorgeformtes Bauteil auf die Verarbeitungstemperatur der Kunststoffmatrix aufgeheizt und in die Spritzgussform des Spritzgusswerkzeugs eingelegt werden. Bei dünnwandigen Faserverbundbauteilen kann die Aufheizung auch im Spritzgusswerkzeug erfolgen.

Das in der Spritzgussform aufgenommene Halbzeug oder vorgeformte Bauteil wird auf eine entsprechende Verarbeitungstemperatur erwärmt, so dass ebenfalls geeignet erwärmtes flüssiges thermoplastisches Matrixmaterial in die Spritzgussform eingespritzt werden kann. Das eingespritzte Matrixmaterial kann dabei beispielsweise das gleiche Material wie das Matrixmaterial 3 eines verwendeten Organoblechs sein. Alternativ kann auch ein anderer thermoplastischer Kunststoff eingespritzt werden, welcher sich mit dem thermoplastischen Matrixmaterial 3 des Halbzeugs oder vorgeformten Bauteils verbinden kann.

Statt eines Spritzgusswerkzeugs kann auch ein Fließpresswerkzeug oder ein anderes geeignetes Werkzeug eingesetzt werden. Die Erfindung ist jedoch auf Spritzgießen und Fließpressen nicht beschränkt.

Fig. 8 zeigt ein Blockdiagramm eines Verfahrens M zum Herstellen eines Faserverbundbauteils, beispielsweise eines in einer der Fig. 1 bis 7 gezeigten Faserverbundbauteile 1. Das Verfahren M kann dabei im Rahmen eines Spritzgieß- oder Fließpressprozesses eingesetzt werden. In einem ersten Schritt S1 erfolgt ein Konsolidieren eines ersten Bereichs 4 eines faserverstärkten Halbzeugs, beispielsweise eines Organoblechs oder eines Organblechstapels, mit mindestens einer Lage 2 eines Fasermaterials und einer thermoplastischen Matrix 3, welche das Fasermaterial tränkt. Dieses Konsolidieren erfolgt bis zu einem ersten Konsolidierungsgrad. Gleichzeitig oder nacheinander erfolgt in Schritt S2 ein Konsolidieren eines zu dem ersten Bereich 4 benachbart liegenden, das heißt eines beabstandeten bzw. an den ersten Bereich 4 angrenzenden, zweiten Bereichs 5 des faserverstärkten Halbzeugs bis zu einem von dem ersten Konsolidierungsgrad verschiedenen zweiten Konsolidierungsgrad. Der zweite Konsolidierungsgrad ist dabei insbesondere kleiner als der erste Konsolidierungsgrad, so dass der zweite Bereich 5 bezogen auf den ersten Bereich 4 nicht vollständig konsolidiert wird, das heißt nicht im selben Umfang verfestigt und kompaktiert wird wie der erste Bereich 4. Zum Beispiel kann der zweite Konsolidierungsgrad zwischen 10% und 80% des ersten Konsolidierungsgrads betragen.

Das verschieden ausgeprägte Konsolidieren in den Schritten S1 und S2 kann beispielsweise dadurch erreicht werden, dass auf den ersten Bereich 4 ein erster Konsolidierungsdruck auf das faserverstärkte Halbzeug aufgebracht, der höher als ein zweiter Konsolidierungsdruck ist, der im zweiten Bereich 5 auf das faserverstärkte Halbzeug aufgebracht wird. Alternativ oder zusätzlich dazu kann auch die Zeitdauer, während der ein Konsolidierungsdruck auf den zweiten Bereich 5 ausgeübt wird, gegenüber der Zeitdauer, während der ein Konsolidierungsdruck auf den ersten Bereich 5 ausgeübt wird, vermindert werden, um die verschiedenen Konsolidierungsgrade zu erreichen. Schließlich ist es auch möglich, den Anteil des Matrixmaterials im zweiten Bereich 5 gegenüber dem des ersten Bereichs 4 zu verringern, um den geringeren Konsolidierungsgrad im zweiten Bereich 5 zu ermöglichen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Insbesondere sind einzelne Merkmale zuvor separat beschriebener Ausführungsformen auch untereinander kombinierbar, sofern nichts gegenteiliges explizit angegeben ist.

### LISTE DER BEZUGSZEICHEN

- 1: Faserverbundbauteil
- 2: Faserlage
- 2a: Faserlagen
- 2b: Faserlagen
- 3: Thermoplastische Matrix
- 4: Erster Bereich
- 5: Zweiter Bereich
- 5a: Dritter Bereich
- 6: Krafteinleitungsbereich
- 7: Schraubdom
- 8: Klebestelle
- 8a: Klebemedium
- 8b: Klebepartner
- 9: Verschraubungsstelle
- B1: Bereichsgrenze
- B2: Bereichsgrenze
- M: Verfahren
- S1: Verfahrensschritt
- S2: Verfahrensschritt

## Patentansprüche

1. Faserverbundbauteil (1), mit:
mindestens einer Lage (2) eines Fasermaterials; und
einer thermoplastischen Matrix (3), welche das Fasermaterial tränkt,
wobei das Faserverbundbauteil (1) mindestens einen ersten Bereich (4) aufweist, der eine erste Anzahl von Faserlagen (2a) aufweist, und in dem der lokale Konsolidierungsgrad des Faserverbundbauteils (1) über einem ersten Konsolidierungsschwellwert liegt, und
wobei das Faserverbundbauteil (1) mindestens einen zweiten, zu dem ersten Bereich (4) benachbart liegenden Bereich (5) aufweist, der eine zweite Anzahl von Faserlagen (2b) aufweist, die höher als die erste Anzahl von Faserlagen (2a) ist, und in dem der lokale Konsolidierungsgrad des Faserverbundbauteils (1) unter einem zweiten Konsolidierungsschwellwert liegt,
wobei der zweite Konsolidierungsschwellwert kleiner als der erste Konsolidierungsschwellwert ist, und wobei der zweite Bereich (5) ein Filmscharnier ausbildet und/oder wobei das Faserverbundbauteil (1) mindestens ein Organoblech oder ein vorkonsolidiertes Blech umfasst.

2. Faserverbundbauteil (1) nach Anspruch 1, wobei der zweite Konsolidierungsschwellwert zwischen 10% und 80% des ersten Konsolidierungsschwellwerts beträgt.

3. Faserverbundbauteil (1) nach einem der Ansprüche 1 und 2, weiterhin mit einem dritten Bereich (5a), welcher Lagen (2) mit von der thermoplastischen Matrix (3) ungetränktem Fasermaterial aufweist,
wobei der zweite Bereich (5) zwischen dem ersten Bereich (4) und dem dritten Bereich (5a) angeordnet ist.

4. Faserverbundbauteil (1) nach einem der Ansprüche 1 bis 3, wobei das Fasermaterial aus einer Faseranordnung aus Glasfasern, Aramidfasern, Kohlenstofffasern, Sisal, Hanf, Kokosfasern, Baumwollfasern und/oder Flachs gebildet ist, und wobei die Faseranordnung ein Gewebe, einen Faserstrang, ein Gestrick, ein Geflecht, ein Gelege, eine Matte und/oder ein Vlies bildet.

5. Faserverbundbauteil (1) nach einem der Ansprüche 1 bis 4, wobei das Faserverbundbauteil (1) ein endlosfaserverstärktes Faserverbundbauteil (1) ist.

6. Verfahren (M) zum Herstellen eines Faserverbundbauteils (1), umfassend:
Konsolidieren (S1) eines ersten Bereichs (4) eines faserverstärkten Halbzeugs mit einer ersten Anzahl von Faserlagen und einer thermoplastischen Matrix (3), welche das Fasermaterial tränkt, bis zu einem ersten Konsolidierungsgrad; und Konsolidieren (S2) eines zu dem ersten Bereich (4) benachbart liegenden zweiten Bereichs (5) des faserverstärkten Halbzeugs bis zu einem von dem ersten Konsolidierungsgrad verschiedenen zweiten Konsolidierungsgrad, wobei der zweite Bereich (5) eine zweite Anzahl von Faserlagen (2b) aufweist, die höher als die erste Anzahl von Faserlagen (2a) ist, und wobei der zweite Konsolidierungsgrad kleiner als der erste Konsolidierungsgrad ist, und wobei der zweite Bereich (5) ein Filmscharnier ausbildet und/oder wobei das Faserverbundbauteil (1) mindestens ein Organoblech oder ein vorkonsolidiertes Blech umfasst.

7. Verfahren (M) nach Anspruch 6, wobei der zweite Konsolidierungsgrad zwischen 10% und 80% des ersten Konsolidierungsgrads beträgt.

## Claims

1. A composite fiber component (1), comprising:
at least one layer (2) of a fiber material; and
a thermoplastic matrix (3) impregnating the fiber material,
wherein the composite fiber component (1) comprises at least a first region (4) comprising a first number of fiber layers (2a) and in which the local degree of consolidation of the composite fiber component (1) is above a first consolidation threshold, and
wherein the composite fiber component (1) comprises at least a second region (5) adjacent to the first region (4) comprising a second number of fiber layers (2b) that is higher than the first number of fiber layers (2a), in which the local degree of consolidation of the composite fiber component (1) is below a second consolidation threshold,
wherein the second consolidation threshold is smaller than the first consolidation threshold, and wherein the second region (5) forms a film hinge and/or wherein the composite fiber component (1) comprises at least one organic sheet or a pre-consolidated sheet.

2. The composite fiber component (1) according to claim 1, wherein the second consolidation threshold is between 10% and 80% of the first consolidation threshold.

3. The composite fiber component (1) according to any one of claims 1 and 2, further comprising a third region (5a) comprising layers (2) of fiber material unimpregnated by the thermoplastic matrix (3), wherein the second region (5) is located between the first region (4) and the third region (5a).

4. The composite fiber component (1) according to any one of claims 1 to 3, wherein the fiber material is formed from a fiber arrangement of glass fibers, aramid fibers, carbon fibers, sisal, hemp, coconut fibers, cotton fibers and/or flax, and wherein the fiber arrangement forms a woven fabric, a fiber strand, a knitted fabric, a braided fabric, a scrim, a mat and/or a nonwoven fabric.

5. The composite fiber component (1) according to any one of claims 1 to 4, wherein the composite fiber component (1) is a continuous fiber reinforced composite fiber component (1).

6. A method (M) for manufacturing a composite fiber component (1), comprising:
consolidating (S1) a first region (4) of a fiber-reinforced semi-finished product comprising a first number of fiber layers and a thermoplastic matrix (3) impregnating the fiber material to a first degree of consolidation; and
consolidating (S2) a second region (5), adjacent to the first region (4), of the fiber-reinforced semifinished product to a second degree of consolidation different from the first degree of consolidation, wherein the second region (5) comprises a second number of fiber layers (2b) that is higher than the first number of fiber layers (2a), and wherein the second degree of consolidation is smaller than the first degree of consolidation, and wherein the second region (5) forms a film hinge and/or wherein the composite fiber component (1) comprises at least one organic sheet or a pre-consolidated sheet.

7. The method (M) according to claim 6, wherein the second degree of consolidation is between 10% and 80% of the first degree of consolidation.

## Revendications

1. Une pièce en matériau composite fibreux (1), comprenant:
au moins une couche (2) d'un matériau fibreux; et
une matrice thermoplastique (3) qui imprègne le matériau fibreux,
dans lequel le composant composite fibreux (1) ayant au moins une première région (4) comprenant un premier nombre de couches fibreuses (2a) et dans laquelle le degré local de consolidation de la pièce en matériau fibreux (1) est supérieur à un premier seuil de consolidation ; et
dans lequel la pièce en matériau fibreux (1) comporte au moins une seconde région (5) adjacente à la première région (4) comprenant un second nombre de couches fibreuses (2b) qui est supérieur au premier nombre de couches fibreuses (2a), dans lequel le degré local consolidation de la pièce en matériau fibreux composite (1) est inférieure à un second seuil de consolidation valeur,
dans lequel la deuxième valeur de seuil de consolidation est inférieure à la première valeur de seuil de consolidation, et dans lequel la seconde région (5) forme une articulation filmique et/ou dans lequel la pièce en matériau composite fibreux (1) comporte au moins une feuille organique ou une feuille préconsolidée.

2. La pièce en matériau composite fibreux (1) selon la revendication 1, dans laquelle la deuxième valeur de seuil de consolidation est comprise entre 10% et 80% de la première valeur de seuil de consolidation.

3. La pièce en matériau composite fibreux (1) selon l'une des revendications 1 et 2, comprenant en outre une troisième région (5a) comprenant des couches (2) de matériaux fibreux non imprégnées par la matrice thermoplastique (3), dans laquelle la seconde région (5) est située entre la première région (4) et la troisième région - (5a).

4. La pièce en matériau composite fibreux(1) selon l'une des revendications 1 à 3, dans laquelle le matériau fibreux est formé à partir d'une disposition fibreuse de fibres de verre, de fibres aramides, de fibres de carbone, de sisal, de chanvre, de fibres de noix de coco, de fibres de coton et/ou de lin, et dans laquelle la disposition fibreuse forme une tissu, un brin de fibres, un tricot, une tresse, un canevas, un tapis et/ou un matériau non-tissé.

5. La pièce en matériau composite fibreux (1) selon l'une quelconque des revendications 1 à 4, dans lequel le composant composite fibreux (1) est un composant composite fibreux continu (1) renforcé.

6. Un procédé (M)de fabrication d'une pièce en matériau composite fibreux (1), comprenant:
la consolidation (S1) d'une première zone (4) d'un produit semi-fini renforcé de fibres avec au moins une couche (2) d'un matériau fibreux et un matrice thermoplastique (3) imprégnant le matériau fibreux à un premier degré de consolidation ; et
la consolidation (S2) d'une deuxième région (5), adjacente à la première région (4), du produit fibreux semi-fini renforcé jusqu'à un deuxième degré de consolidation différent du premier degré de consolidation, dans lequel la deuxième région (5) comporte un second nombre de couches fibreuses (2b) qui est supérieur au premier nombre de couches fibreuses (2a), et dans lequel le second degré de consolidation est plus petit que le premier degré de consolidation, et dans lequel la seconde région (5) forme une articulation filmique et/ou dans lequel la pièce en matériaux composite fibreux (1) comporte au moins une feuille organique ou une feuille pré-consolidée.

7. Le procédé (M) selon la revendication 6, dans lequel le deuxième degré de consolidation est compris entre 10% et 80% du premier degré de consolidation.
